(19) Europäisches Patentamt
European Patent Office
Office européen des brevets

(11) Veröffentlichungsnummer: **0 280 182 B1**

# (12) EUROPÄISCHE PATENTSCHRIFT

(45) Veröffentlichungstag der Patentschrift: **23.10.91**

(51) Int. Cl.$^5$: **C09B 45/16**, D06P 1/10

(21) Anmeldenummer: **88102326.1**

(22) Anmeldetag: **18.02.88**

## (54) Chromkomplexfarbstoff.

(30) Priorität: **21.02.87 DE 3705646**

(43) Veröffentlichungstag der Anmeldung:
**31.08.88 Patentblatt 88/35**

(45) Bekanntmachung des Hinweises auf die Patenterteilung:
**23.10.91 Patentblatt 91/43**

(84) Benannte Vertragsstaaten:
**CH DE FR GB IT LI**

(56) Entgegenhaltungen:
**EP-A- 0 019 842**

(73) Patentinhaber: **BASF Aktiengesellschaft**
**Carl-Bosch-Strasse 38**
**W-6700 Ludwigshafen(DE)**

(72) Erfinder: **Grychtol, Klaus, Dr.**
**Seebacher Strasse 96a**
**W-6702 Bad Duerkheim(DE)**

EP 0 280 182 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen neuen Chromkomplexfarbstoff der Formel I

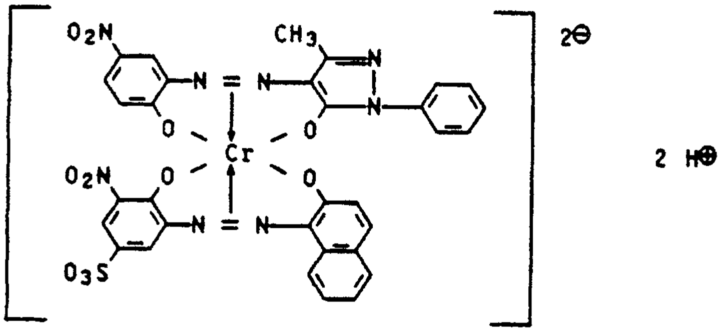

(I)

sowie Salze dieser Verbindung.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl, -Tetraalkyl oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl-oder N,N-dialkylsubstituierten Produkte. Unter Alkyl ist dabei im allgemeinen jeweils geradkettiges oder verzweigtes $C_1$-$C_{20}$-Alkyl zu verstehen, das durch Hydroxylgruppen substituiert und/oder durch ein bis drei Sauerstoffatome unterbrochen sein kann.

Bevorzugt sind diejenigen Salze, die ein Lithium- oder ein substituiertes Ammoniumkation aufweisen. Sie eignen sich in besonderer Weise zur Herstellung von flüssigen Farbstoffzubereitungen.

Der erfindungsgemäße Chromkomplexfarbstoff wird nach an sich bekannten Methoden hergestellt. Beispielsweise kann man an den 1 : 1-Chromkomplex des Azofarbstoffs der Formel II

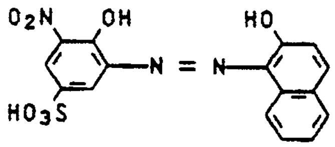

(II)

den Azofarbstoff der Formel III

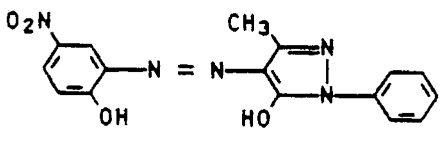

(III)

anlagern. Einzelheiten der Herstellung können Beispiel 1 entnommen werden.

Der neue Chromkomplexfarbstoff der Formel I sowie dessen Salze eignen sich in vorteilhafter Weise zum Färben von Polyamiden, wie Wolle, Polycaprolactam oder Nylon, sowie für Leder.

Aus der DE-A-1 012 007 ist ein Chromkomplexfarbstoff bekannt, bei dem, verglichen mit dem erfindungsgemäßen Farbstoff, die Nitro- und die Sulfonsäuregruppen vertauscht sind. Überraschenderweise zeichnet sich der erfindungsgemäße Chromkomplexfarbstoff durch bessere Echtheitswerte in der Walk- und Überfärbeechtheit aus.

Die nachfolgenden Beispiele sollen die Erfindung näher erläutern.

Beispiel 1

a) 468 g 6-Nitro-2-aminophenol-4-sulfonsäure wurden in 2000 ml Wasser und 500 g Eis angerührt. Man diazotierte durch Zutropfen von 610 ml 3,3-normaler Natriumnitritlösung. Der Überschuß von Nitrit wurde mit Amidosulfonsäure nach 45-minütigem Rühren zerstört. Die Diazolösung lief dann in eine Lösung aus 306 g 2-Hydroxynaphthalin in 2000 ml Wasser, 145 g Natriumhydroxid und 500 g Eis. Die Kupplung war nach kurzer Zeit beendet. Daraufhin stellte man mit 400 ml konz. Salzsäure einen pH-Wert von 1,0 ein. Man gab dann eine heiße Lösung aus 160 g Chrom(III)oxid in verdünnter Ameisensäure zu und chromierte bei 135 °C, wobei der Druck auf 3,5 bar stieg. Die Chromierung war nach drei Stunden beendet. Nach dem Abkühlen wurde abgesaugt. Man erhielt 1460 g eines Preßguts, das in feuchtem Zustand weiter umgesetzt wurde.

b) 293 g 4-Nitro-2-aminophenol wurden in 800 ml Wasser und 300 g Eis angerührt. Man stellte mit konz. Salzsäure einen pH-Wert von 1,0 ein und senkte die Temperatur durch Zugabe von 1300 g Eis auf -3 bis 0 °C. Nun liefen 570 ml 3,3-normaler Natriumnitritlösung zu. Die Diazotierung war nach 40 Minuten beendet. Die Diazosuspension lief dann schnell in eine Lösung aus 344 g 1-Phenyl-3-methylpyrazol-5-on in 1900 ml Wasser, 76 g Natriumhydroxid, 170 g Natriumacetat und 700 g Eis. Nach beendeter Kupplung wurde der pH-Wert mit 400 ml konz. Salzsäure auf 0,3 gestellt. Danach wurde auf 65 °C erwärmt und abgesaugt. Mit 8000 ml Wasser wurde dann neutral gewaschen. Man erhielt 1770 g Preßgut, das in feuchtem Zustand weiter eingesetzt wurde.

c) Die 1770 g Nutschgut aus Stufe b) wurden in 4000 ml Wasser angerührt. Dann fügte man den feuchten Prozeßkuchen der Stufe a) zu und erwärmte auf 90 °C. Der pH-Wert der Reaktion wurde mit insgesamt 163 g Natriumhydroxid zwischen 7,8 und 8 gehalten. Das Ende der Umsetzung wurde dünnschichtchromatographisch verfolgt. Nach dem Sprühtrocknen der Farbstoffsuspension erhielt man 1658 g des braunen Farbstoffs in Form des Natriumsalzes.

Beispiel 2

Wolle wurde jeweils mit dem erfindungsgemäßen Farbstoff in Form des Natriumsalzes bzw. mit dem aus der DE-A-1 012 007 (Tabelle, Farbstoff Nr. 4) bekannten Farbstoff (ebenfalls in Form des Natriumsalzes) ausgefärbt. Die so behandelte Wolle zeigte jeweils folgende Echtheitswerte (Ausbluten von Wolle):

| | Erfindungsgemäßer Farbstoff | Farbstoff gemäß DE-A-1 012 007 |
|---|---|---|
| Walkechtheit sauer, leicht (DIN 54042) | 4 - 5 | 3 |
| Walkechtheit sauer, schwer (DIN 54043) | 3 - 4 | 1 - 2 |
| Überfärbeechtheit schwefelsauer (DIN 54049 - Verfahren S) | 2 - 3 | 1 |

## Patentansprüche

1. Chromkomplexfarbstoff der Formel I

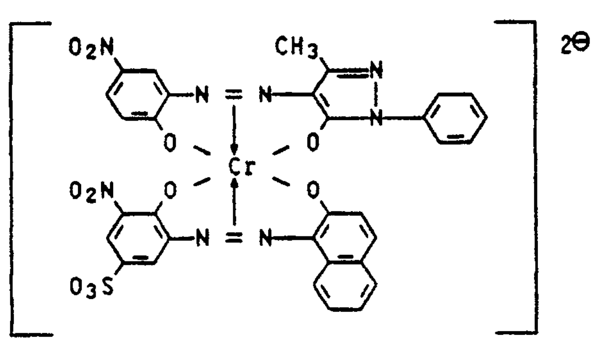

$2\ H^{\oplus}$ (I)

sowie Salze dieser Verbindung.

2. Verwendung des Chromkomplexfarbstoffs oder dessen Salze gemäß Anspruch 1 zum Färben von Polyamiden oder Leder.

## Claims

1. The chromium complex dye of the formula I

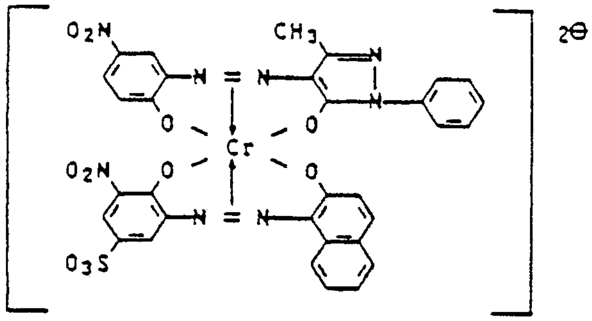

2 $H^{\oplus}$ (I)

and salts thereof.

2. A method of using a chromium complex dye, or a salt thereof, as claimed in claim 1 for dyeing polyamides or leather.

## Revendications

1. Complexe de chrome colorant de formule I

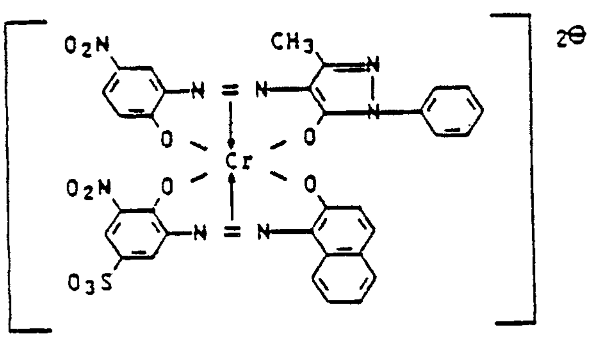

2 $H^{\oplus}$ (I)

ainsi que les sels de ce composé.

2. Utilisation du complexe de chrome colorant ou de ses sels selon la revendication 1, pour colorer des polyamides ou le cuir.